# EUROPÄISCHE PATENTSCHRIFT

(11) **EP 2 393 704 B1**
(45) Veröffentlichungstag und Bekanntmachung des Hinweises auf die Patenterteilung: **25.06.2014**
(21) Anmeldenummer: 11711435.5
(22) Anmeldetag: 11.03.2011
(51) Int. Cl.: B62K 3/00, B62K 25/04, A63C 17/00

(54) **ROLLER**
SCOOTER
TROTTINETTE

(30) Priorität: 11.03.2010 AT 4032010
(43) Veröffentlichungstag der Anmeldung: 14.12.2011
(73) Patentinhaber: Kriechbaum, Günther, 1230 Wien (AT)
(72) Erfinder: Kriechbaum, Günther, 1230 Wien (AT)
(74) Vertreter: Wildhack, Andreas
(86) Internationale Anmeldenummer: PCT/AT2011/000127
(87) Internationale Veröffentlichungsnummer: WO 2011/109851

(56) Entgegenhaltungen:
- DE-A1- 19 513 649
- DE-U1- 20 107 388
- US-A- 2 953 389
- US-A- 3 605 929
- US-A1- 2002 121 756
- US-A1- 2002 148 663
- US-A1- 2005 012 290
- US-A1- 2007 235 970

## Beschreibung

Die Erfindung betrifft einen Roller mit einem Vorderrad und zwei parallel nebeneinander angeordneten Hinterrädern, wobei das Trittbrett mit der damit verbundenen, das Vorderrad tragenden Lenksäule und die beiden Hinterräder relativ zueinander verschwenkbar sind, wobei die beiden Hinterräder auf einem Träger gelagert sind und wobei dieser Träger und das Trittbrett um eine parallel zur Längsrichtung des Trittbretts verlaufende Schwenkachse relativ zueinander verschwenkbar sind, wobei der Träger oberhalb des hinteren Endbereiches des Trittbrettes auf diesem Endbereich verschwenkbar gelagert ist.

Dreirädrige Fahrzeuge ähnlicher Art sind aus der US 3605929 und der DE 19513649 A1 bekannt. Diese Fahrzeuge sind keine Roller und besitzen Sitze. Die Schwenkachse des Trägers der Hinterräder liegt auf dem Niveau des Trittbretts.

Ziel der Erfindung ist es, einen leichten, einfach zu fahrenden und zu bedienenden, konstruktiv stabil aufgebauten Roller zu erstellen. Ein derartiger Roller soll zusammenlegbar sein, sicher bremsbar sein und auch mit einem Elektroantrieb versehbar sein. Schließlich soll ein derartiger Roller ein sicheres Kurvenfahren ermöglichen, insbesondere ein Kurvenfahren, bei dem das Trittbrett mit der Lenksäule in die Kurve geneigt werden kann, wobei jedoch die Hinterräder stabil und aufrecht am Boden verbleiben.

Diese Ziele werden bei einem Roller der eingangs genannten Art dadurch erreicht, _ dass die Achsen der Hinterräder vom Träger auf einem Niveau vom Träger abgehen, das im Abstand oberhalb der Schwenkachse liegt. Diese Ausbildung ist für das Fahrverhalten und für das Treten von Vorteil.

Durch Anordnung des Trägers oberhalb des Endbereiches des Trittbrettes kann das Trittbrett der Strasse bzw. Aufstandebene des Rollers angenähert werden, d. h. das Trittbrett wird tiefer gelegt, sodass ein sichereres Fahrverhalten erreicht wird. Da der Bodenabstand verringert wird, muss beim Treten das Standbein weniger gebeugt werden, wodurch die Belastung des Knies verringert wird.

Durch die Ausbildung des Endbereiches des Trittbrettes derart, dass der zwischen den Hinterrädern liegende Endbereich schmäler als das Trittbrett ausgebildet ist, kann die Baubreite des Roller verringert werden. Gleichzeitig wird eine Gewichtsverringerung erreicht, ohne dass Einbußen am Fahrkomfort eintreten. Ferner ist es möglich, die Durchmesser der beiden Hinterräder groß zu wählen, ohne dass das Trittbrett einen zu großen Bodenabstand erreicht.

Für die Lagerung des Trägers auf dem Trittbrett bzw. dem Endbereich des Trittbrettes, kann es vorteilhaft sein, wenn der Träger zumindest eine in Längsrichtung des Rollers verlaufende Ausnehmung aufweist, von der zumindest ein Lagerbolzen aufgenommen ist, der insbesondere beidseitig von dem das Trittbrett nach hinten verlängernden Endbereich abgestützt bzw. von diesem getragen ist oder wenn vom Träger Lagerzapfen nach vorne und hinten abgehen, die von Lagerausnehmungen in dem das Trittbrett nach hinten verlängernden Endbereich aufgenommen sind. Ferner kann vorgesehen sein, dass vom Träger zumindest ein gegebenenfalls an diesem angeformter Lagerzapfen abgeht, der von einer Lagerausnehmung im Trittbrett oder in dem das Trittbrett nach hinten verlängernden Endbereich aufgenommen bzw. in dieser verschwenkbar gelagert ist, oder dass der Endbereich des Trittbretts in Form eines Lagerbolzens ausgebildet ist oder vom Trittbrett ein Lagerbolzen abgeht, der von einer Lageraufnahme des Trägers angenommen und in dieser verschwenkbar gelagert ist.

Diese Lagerungsmöglichkeiten erlauben alle eine Relatiwerschwenkung des Trägers in Bezug auf den Endbereich des Trittbrettes um eine in Längsrichtung des Trittbrettes verlaufende Achse. Derartige Lagerungen sind stabil, sicher und leichtgängig.

Um die Stabilität und das Fahrverhalten des Rollers zu verbessern, kann vorteilhafterweise vorgesehen sein, dass der Träger eine nach unten weisende Fläche aufweist, die im Abstand von der nach oben weisenden Fläche des Endbereiches liegt und mit dieser einen Zwischenraum begrenzt, insbesondere zu dieser im Abstand parallel verläuft, und dass in dem Zwischenraum zumindest ein die gegenseitigen Verschwenkbewegungen der beiden Flächen und damit die Relativverschwenkung des Trägers und des Endbereiches zueinander dämpfender bzw. diesen Schwenkbewegungen entgegenwirkender Dämpfungsbauteil angeordnet ist. Je nach Wahl der Elastizität bzw. der Dämpfungscharakteristik des Dämpfungsbauteiles, kann einem relativen Verschwenken des Trittbrettes gegenüber dem Träger mehr oder weniger entgegengewirkt werden. Der Dämpfungsbauteil kann mit dem Endbereich und/oder dem Träger durch Kleben, Vulkanisieren, Verschrauben befestigt oder auch nur durch Einpassen in eine Ausnehmung in der Oberseite des Endbereiches oder in der Unterseite des Trägers festgelegt werden.

In vergleichbarer Weise wie ein elastisch verformbarer Dämpfungsbauteil aus Gummi oder Kunststoff kann alternativ auch eine Federeinheit vorgesehen sein, welche einem Verschwenken des Trägers relativ zum Endbereich des Trittbrettes einen definierten Widerstand aufgrund ihrer Federcharakteristik entgegensetzt. Zweckmäßig kann es sich um Blattfedern oder auch V-förmig geformte Federn handeln, die zwischen dem Endbereich des Trittbretts und der Basisfläche des Trägers angeordnet bzw. an diesen Teilen befestigt oder festgelegt sind.

Der Abstand zwischen der Achse der Hinterräder und der Schwenkachse hängt vor allem von der gewünschten Bodenfreiheit und dem Durchmesser der Hinterräder ab.

Der Träger kann vom Endbereich nach oben auskragen bzw. abgehen und im oberen Endabschnitt des Trägers kann eine dem Umfang der beiden Hinterräder in Richtung Trittbrett folgende bzw. im Abstand dazu verlaufende Bremsabdeckung verschwenkbar und bei Belastung gegen die beiden Hinterräder andrückbar gelagert sein. Der Träger trägt somit eine beide Hinterräder bremsende Bremse. Diese Ausbildung einer Bremse kann bei beliebigen Rollern mit einem oder zwei Hinterrädern verwirklicht werden, auch wenn der Träger und das Trittbrett nicht relativ zueinander verschwenkbar sind. Zwischen der Bremsabdeckung und dem Träger ist ein elastisch verformbarer Gummi- oder Kunststoffblock oder eine Federeinheit angeordnet, der bzw. die die Bremsabdeckung trägt bzw. abstützt bzw. deren Rückstellung veranlasst. Bei Einsatz eines Gummiblocks wird auf die Bremsabdeckung eine entsprechende Rückstellkraft ausgeübt, ohne dass eigene Rückstellfedern vorgesehen werden müssen. Das Bremsverhalten wird verbessert, wenn die Bremsabdeckung von ihrem Befestigungspunkt am Träger dem Umfang der beiden Hinterräder in Richtung Trittbrett folgt, da in diesem Fall die Räder in die Bremsabdeckung von deren Befestigungspunkt am Träger in Richtung Trittbrett hinein laufen bzw. sich der Spalt zwischen der Bremsabdeckung und den Hinterrädern in Umdrehungsrichtung der Hinterräder verengt und die Bremsbelastung im vorderen, unten liegenden Endbereich, allenfalls durch einen dort an der Bremsabdeckung angebrachten Pedalteil, aufgebracht wird. Die Bremsabdeckung wird mit dem Fuß betätigt und gegen die Hinterräder gedrückt und entspricht in ihrer Wirkung einer Fußbremse.

Ganz allgemein von Vorteil ist es, wenn bei Rollern das Trittbrett in Richtung von der Lenksäule zu den Hinterrädern hin abfallend geneigt ausgebildet ist. Diese Ausbildung kann einfach erreicht werden, indem der Endbereich des Trittbrettes entsprechend tief gelegt wird. Dies wird beispielsweise erreicht, indem bei gleichbleibendem Durchmesser der Hinterräder der Abstand zwischen der Schwenkachse und den Achsen der Hinterräder größer gewählt wird.

Von Vorteil ist es ferner wenn bei Rollern, insbesondere auch beim erfindungsgemäßen Roller, lediglich eines der beiden unabhängig voneinander drehbaren Hinterräder mit einer vorgesehenen weiteren Bremse, insbesondere einer Handbremse gebremst wird, sodass beim Bremsen ein Blockieren beider Hinterräder vermieden wird und der Roller dadurch spurtreuer gebremst werden kann.

Ein erfindungsgemäßer Roller besitzt eine Handbremse, mit der unabhängig von der fußbetätigten Bremsabdeckung eine Bremsvorrichtung betätigbar ist. Als Bremsvorrichtung kann vorteilhafter Weise eine Scheibenbremse vorgesehen sein, die auf eines der Hinterräder einwirkt. Auch andere Arten von Bremsvorrichtungen sind möglich, beispielsweise Bandbremsen, die eine mit der Achse eines der Hinterräder verbundene Scheibe an deren Umfangsfläche mittels eines längs dieser Umfangfläche geführten Bandes bremsen.

Es ist auch möglich, den Roller mit einem Elektroantrieb zu versehen. Vorteilhafterweise wird dazu das nicht gebremste Hinterrad mit einem Antriebsritzel oder einer Antriebsscheibe versehen und am Träger wird ein Elektromotor angebracht, der das Antriebsritzel oder die Scheibe über einen Riemen, einen Zahnriemen oder eine Kontaktwelle antreibt. Die Regeleinheiten und Batterien für einen derartigen Elektroantrieb können an der Unterseite des Trittbrettes allenfalls in einem dort ausgenommenen Aufnahmeraum untergebracht werden. Dazu wird auf die Achse des angetriebenen Hinterrades eine Scheibe, insbesondere aus Kunststoff, vorzugsweise aus Polyurethan, aufgesetzt, an der die Abtriebswelle des Elektromotors anliegt, insbesondere mit Federkraft angedrückt wird. Vorteilhafterweise können mehrere Elektromotoren vorgesehen sein, welche insbesondere an diagonal gegenüberliegenden Umfangsstellen an der Antriebsscheibe anliegen. Die Kraftübertragung von der Abtriebswelle des Elektromotors auf die Scheibe erfolgt durch Reibschluss.

Von besonderen Vorteil ist es, wenn ganz allgemein bei Rollern beliebiger Bauart und auch beim erfindungsgemäßen Roller eine Überschlagsicherung vorgesehen ist, welche Sicherung ein unbeabsichtigtes Wegrollen bzw. Hochschleudern des Rollers verhindert, wenn der Schwerpunkt des Fahrers zu weit hinter dem Trittbrett zu liegen kommt. Dazu ist vorgesehen, dass vom Endbereich des Trittbrettes ein Vorsprung abgeht, der über die Endbegrenzungsebene der Hinterräder nach hinten etwa in Trittbretthöhe oder Höhe der Achsen der Hinterräder vorsteht. Dieser Vorsprung ist entweder mit dem Endbereich einstückig ausgebildet oder durch einen an dem Endbereich befestigten Bauteil gebildet. Für den Fall, dass das Vorderrad vom Boden in unbeabsichtigter Weise zu hoch abhebt, schleift das Ende dieses Vorsprungs am Boden und verhindert, dass sich das Vorderrad weiter hebt bzw. sich die Hinterräder vom Fahrer unkontrolliert entfernen und bremst die Bewegung des Rollers ab.

Des weiteren kann es bei Rollern bzw. bei entsprechenden Rollerantrieben und auch bei dem Antrieb des erfindungsgemäßen Rollers vorgesehen sein, dass auf der Achse des angetriebenen Hinterrades eine Leerlaufnabe befestigt bzw. gelagert ist, von der die Antriebsscheibe getragen ist, an deren Umfangsfläche die Abtriebswelle zumindest eines vom Träger getragenen Elektromotors anliegt. Die Kombination einer Leerlaufscheibe mit einer darauf aufgesetzten Kunststoffscheibe mit Reibwellenantrieb hat sich als leicht und konstruktiv einfach und betriebssicher erwiesen.

Im Folgenden wird ein erfindungsgemäßer Roller beispielsweise anhand der Zeichnungen näher erläutert.
Fig. 1 zeigt eine schematische Seitenansicht eines erfindungsgemäßen Rollers.
Fig. 2a und 2b zeigen Schnitte längs der Linie II-II in Fig. 1 von vorne gesehen, einmal bei Normalfahrt eines Rollers und einmal bei Kurvenfahrt.
Fig. 3a und 3b zeigen Schnitte entlang der Linie III-III in Fig. 2a, einmal bei unbelasteter Bremsabdeckung und einmal bei belasteter Bremsabdeckung.
Fig. 4 zeigt eine Draufsicht auf den Roller bei abgenommener Bremsabdeckung.
Fig. 5 zeigt einen Ausführungsvariante mit einer Federeinheit für die Dämpfung der Relativ-Verschwenkung zwischen dem Träger und dem Endbereich des Trittbrettes.
Fig. 6 zeigt eine nicht zur Erfindung gehörende Ausführung für die Anordnung der Hinterradachsen.

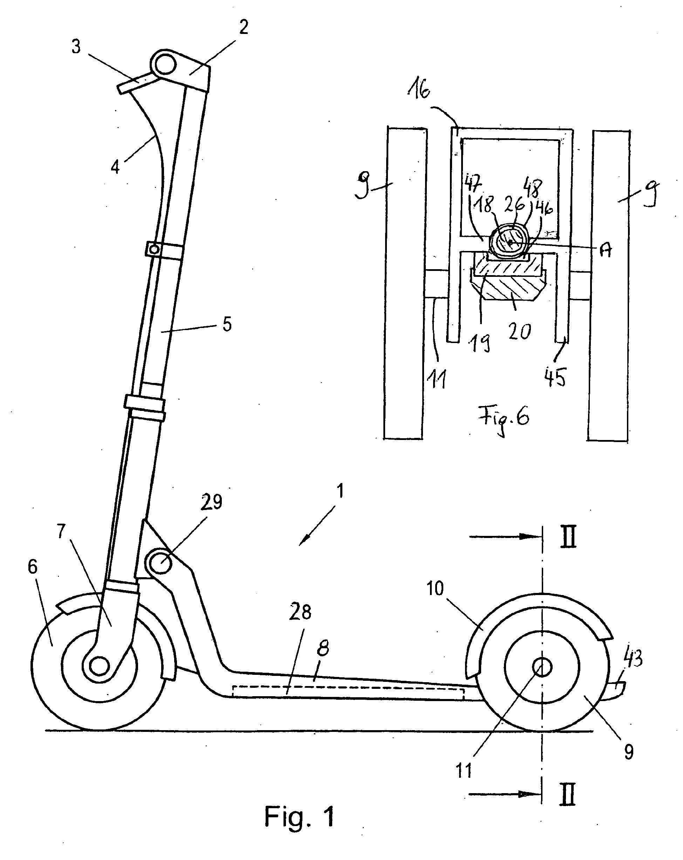

Fig. 1 zeigt einen Roller 1 mit einem Vorderrad 6, das von einer Gabel 7 getragen ist, die mit einer Lenksäule 5 verbunden ist. Die Lenksäüle 5 trägt einen Lenker 2, an dem ein Handbremshebel 3 befestigt ist, mit dem über einen Seilzug 4 oder Hydraulikleitung über eine entsprechende Hydraulik eine auf eines der beiden Hinterräder 9 einwirkende Bremsvorrichtung 13 betätigbar ist. An der Lenksäule 5 ist ein Trittbrett 8 angelenkt, an dessen hinterem Endbereich 20 die Hinterräder 9 mittels Achsen 11 gelagert sind. Die beiden Hinterräder 9 werden von einer gemeinsamen Bremsabdeckung 10 über einen Teilbereich ihres Umfangs überdeckt.

Die gelenkige Verbindung 29 zwischen der Lenksäule 5 und dem Trittbrett 8 ist vorgesehen, um ein Zusammenklappen des Rollers 1 zu ermöglichen. Arretiervorrichtungen für die Verbindung 29 sind nicht dargestellt.

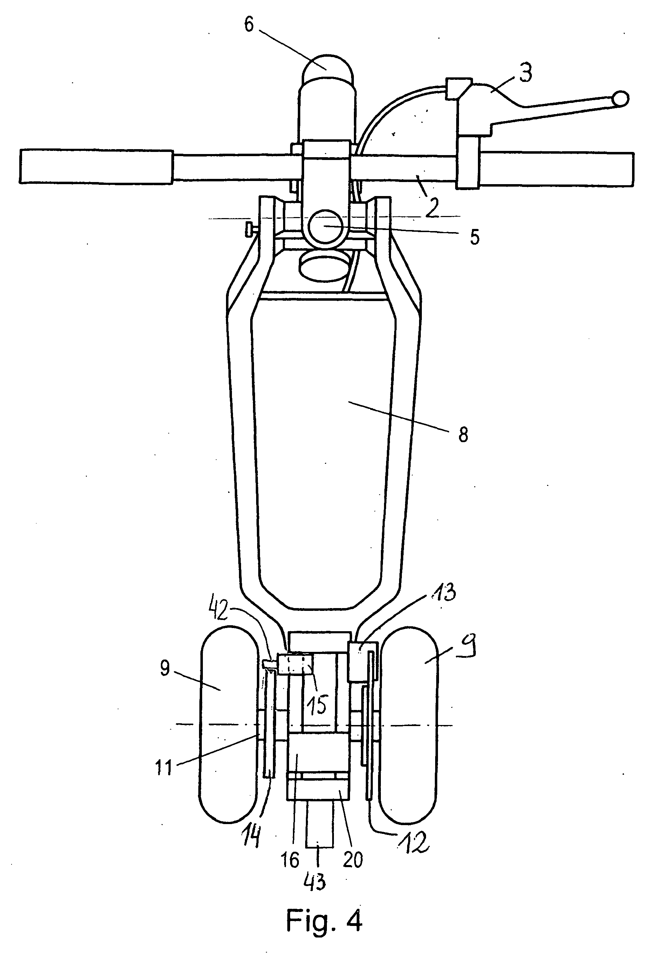

Fig. 4 zeigt eine Draufsicht auf den Roller 1. Das Trittbrett 8 wird von der Lenksäule 5 in Richtung der Hinterräder 9 schmäler. Letztlich verschmälert sich das Trittbrett 8 in einen Endbereich 20, der beträchtlich schmäler als das Trittbrett 8 ist, oberhalb welchen Endbereiches 20 die Achsen 11 für die Hinterräder 9 liegen. Durch die Verschmälerung des Trittbretts 8 in den Endbereich 20, z.B. auf 15% bis 35% der Breite des Trittbretts 8, kann die Baubreite des Rollers 1 in diesem Bereich verringert werden, da die Hinterräder 9 näher nebeneinander angeordnet werden können.

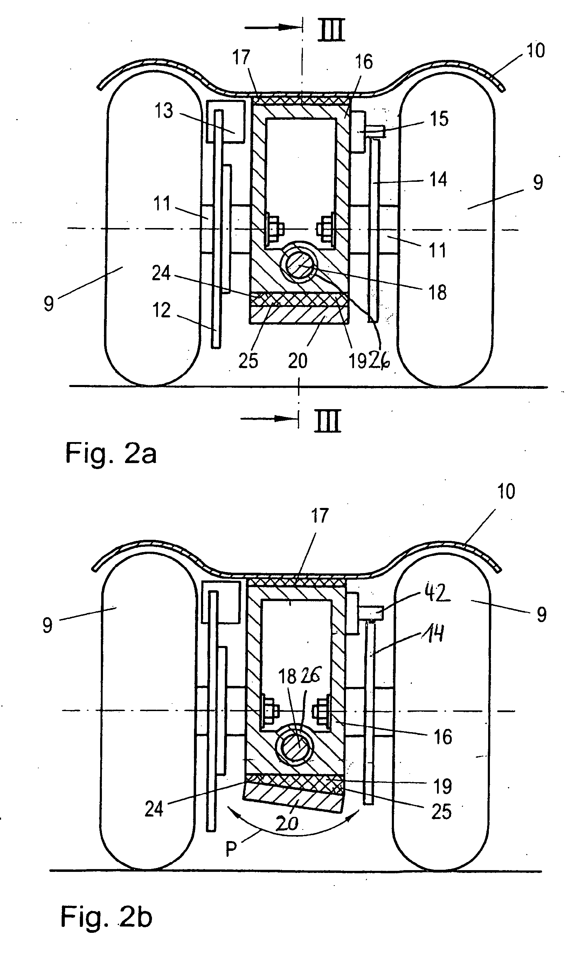

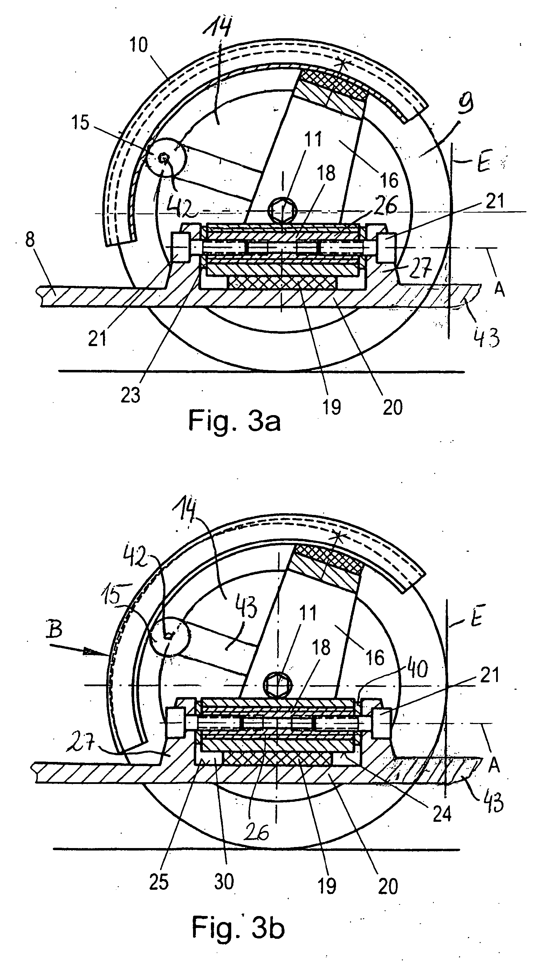

In den in Fig. 2a und 3a dargestellten Schnitten ist zu erkennen, dass der Endbereich 20 über nach oben abgehende Vorsprünge 27 einen Träger 16 verschwenkbar abstützt. Der Träger 16 ist dabei um eine Schwenkachse A relativ zum Endbereich 20 verschwenkbar gelagert, welche Achse A in Längsrichtung des Rollers 1 bzw. des Trittbrettes 8 verläuft. Es ist dazu vorgesehen, dass der Träger 16 in seinem unteren Bereich eine Ausnehmung oder Bohrung zur Aufnahme eines von einer Hülse 26 umgebenen Lagerbolzens 18 besitzt, welcher Lagerbolzen 18 in den Vorsprüngen 27 mittels in seine Endbereiche eingebrachten Feststellschrauben 21 festgelegt ist. Zwischen dem Lagerbolzen 18 und der Innenwandfläche der Ausnehmung 23 ist diese vorzugsweise aus Messing gefertigte Hülse 26 angeordnet. Beilagscheiben 40 sind zwischen den Fortsätzen 27 und dem Träger 16 auf die Schrauben 21 aufgesteckt. Um diesen Lagerbolzen 26 kann der Träger 16 relativ zum Endbereich 20 verschwenkt werden. Mit dieser Schwenklagerung können beim Kurvenfahren die Lenksäule 5, das Vorderrad 6 und das Trittbrett 8 in die Kurve gelegt werden, wobei jedoch die beiden Hinterräder 9 lagestabil, das heißt vertikal zur Aufstandsfläche des Rollers 1, verbleiben.

In Fig. 2b ist die Lage des Endbereiches 20 relativ zum Träger 16 in Kurvenfahrt dargestellt, und zwar beim Befahren einer Linkskurve (Schnittansicht von vorne). Aufgrund der Lagerung des Trägers 16 auf dem Endbereich 20 des Trittbrettes 8 ist eine gegenseitige Verschwenkung des Endbereichs 20 und Trägers 16 in Richtung des Pfeiles P möglich. Bei einer Kurvenfahrt nach rechts wird ein vorgesehener Dämpfungsbauteil 19 auf seiner links liegenden Seite zusammengedrückt. Es wird damit auch eine gewisse Rückstellwirkung für das gegenüber dem Träger 16 verschwenkte Trittbrett 8 erreicht.

Wie insbesondere aus den Fig. 2a, 2b, 3a, 3b ersichtlich ist, ist der Dämpfungsbauteil 19 zwischen der oberen Fläche 25 des Endbereiches 20 und der unteren Fläche 24 des Trägers 16 angeordnet. Dieser Dämpfungsbauteil 19 umfasst einen elastisch verformbaren Gummi- oder Kunststoffblock, mit dem die gegenseitigen Bewegungen dieser Bauteile je nach Elastizität des Dämpfungsbauteiles gedämpft werden können, um das Fahrverhalten insbesondere in Kurven zu stabilisieren.

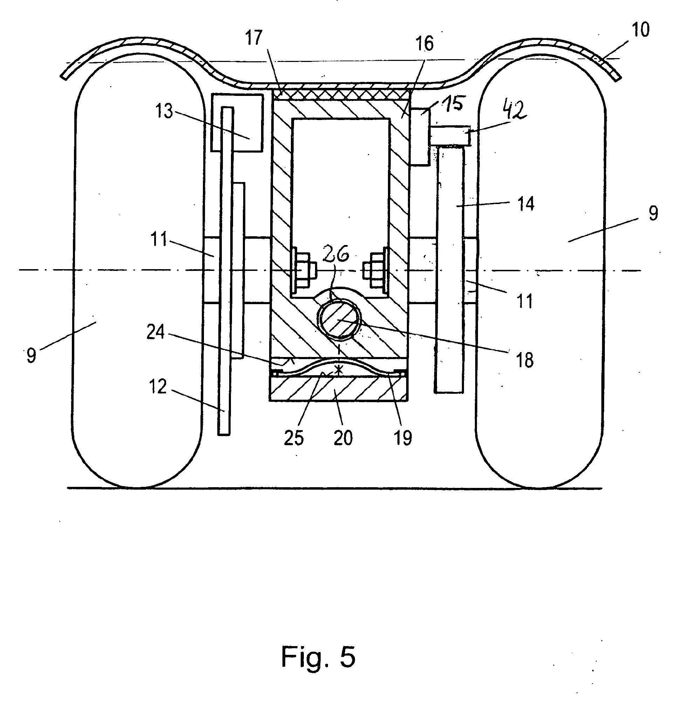

In Fig. 5 ist eine Ausführungsform eines Rollers 1 dargestellt, bei der anstelle eines Gummi- oder Kunststoffblocks eine sich in Längsrichtung des Rollers 1 erstreckende, im Schnitt U- bzw. V-förmige Federeinheit als Dämpfungsbauteil 19 zum Einsatz kommt. Die Federeinheit ist einerseits an dem Endbereich 20 des Trittbrettes 8 festgelegt bzw. darauf mit ihren Enden verschiebbar gelagert und andererseits am Träger 16 befestigt.

Aus Fig. 5 ist auch zu erkennen, dass die Achsen 11 der Hinterräder 9 auf einem Niveau liegen, das oberhalb der Hülse 26 bzw. des Bolzens 18 bzw. der Schwenkachse A liegt. Durch Änderung des Niveaus kann der Bodenabstand des Trittbretts 8 verringert werden, womit die Fahrstabilität verbessert und das Treten erleichtert werden.

Der Träger 16 ist vorteilhafterweise als Kastenträger ausgeführt, wobei im unteren bzw. Basisbereich des Kastens die Ausnehmung für die Hülse 26 bzw. die Lagerzapfen bzw. Bolzen 18 ausgebildet ist.

Anstelle einer Lagerung, wie sie in Fig. 3 und 3a dargestellt ist, können auch andere Ausführungsformen für eine Lagerung vorgesehen werden. Ohne Weiteres kann auch eine Lagerung derart erfolgen, dass am Träger 16 bzw. in dessen Basisbereich Lagervorsprünge bzw. -bolzen ausgebildet sind bzw. abgehen, die von angepassten Ausnehmungen, insbesondere von am Endbereich 20 gelagerten Fortsätzen 27 aufgenommen bzw. in dort vorgesehenen Lagerausnehmungen festgelegt werden. Eine derartige Ausführungsform stellt eine kinematische Umkehr der dargestellten Lagerungsmöglichkeit dar.

Soferne der Endbereich des Trittbretts 8 als Lagerbolzen ausgebildet und in eine Schwenkausnehmung des Trägers 16 eingeführt ist, kann vom Trittbrett 8 ein plattenförmiger Vorsprung abgehen, der sich nach hinten unterhalb des Trägers 16 erstreckt, sodass der Träger im Abstand von diesen plattenförmigen Vorsprung gelagert ist. In diesem Zwischenraum wird sodann ein Dämpfungsbauteil eingesetzt.

Aus Fig. 5 ist -ganz allgemein für beliebige Roller anwendbar- zu entnehmen, dass oberhalb der Hinterräder bzw. im oberen Bereich des Trägers 16 ein elastisch verformbarer Gummi- oder Kunststoffblock angeordnet bzw. befestigt ist. Auf diesen Kunststoffblock 17 ist die Bremsabdeckung 10 aufgelegt bzw. daran befestigt. Diese Bremsabdeckung 10 ist damit auf dem Träger 16 elastisch rückstellbar gelagert.

Fig. 3a zeigt die Bremsabdeckung 10, die für ein gleichzeitiges Abbremsen der beiden Hinterräder 9 vorgesehen ist, in unbetätigtem Zustand. Wird auf die Bremsabdeckung 10, wie in Fig. 3b dargestellt, Druck, z.B. mit dem Fuß, in Richtung des Pfeiles B ausgeübt, so erfolgt ein Abbremsen der beiden Hinterräder 9. Die Aufhängung der Bremsabdeckung 10 ist derart, dass die Bremsabdeckung 10 bei Betätigung zum Trittbrett hin verstellt wird. Der Betätigungsbereich und Aktionsbereich der Bremsabdeckung liegt somit zwischen Trittbrett 8 und Aufhängung bzw. Befestigungsbereich.

Die Bremsabdeckung 10 kann auf dem Träger 16 bzw. dessen oberen Endabschnitt auch schwenkbar gelagert sein und gleichzeitig können Federeinheiten vorgesehen sein, welche bei Betätigung der Bremsabdeckung 10 diese wieder in ihre Ausgangslage rückstellen.

Aus Fig. 5 ist ferner ersichtlich, dass im Schnitt von vorne gesehen, am linken Hinterrad 9 eine Bremsscheibe 12 auf die Achse 11 aufgesetzt ist, die von einer handbetätigbaren Bremsvorrichtung 13 abbremsbar ist, sodass dieses Hinterrad 9 nach Art einer Scheibenbremse abgebremst werden kann. Wesentlich ist, dass lediglich eines der beiden Hinterräder 9 abgebremst wird, sodass beim Blockieren des abgebremsten Hinterrades 9 das andere Hinterrad 9 die Spur halten kann.

Angedeutet ist des Weiteren in Fig. 5 für ein Hinterrad 9 ein Elektroantrieb, wozu auf der Achse 11 dieses Hinterrades 9 ein Antriebsritzel oder eine Antriebsscheibe 14 aus Kunststoff befestigt ist, das (die) mit zumindest einem Elektromotor 15 zusammenwirkt. Zur Kraftübertragung vom Motor 15 auf die Scheibe 14 dient eine Antriebswelle 42.

Der Elektromotor 15 kann über einen Stützträger 43 vom Träger 16 getragen sein.

Ganz allgemein ist es zur Erhöhung des Fahrkomforts bei Rollern von Vorteil, wenn das Trittbrett 8 von vorne nach hinten zu den Hinterrädern 9 hin abfallend geneigt ist.

Die Befestigung des Trägers 16 im hinteren Endbereich 20 des Trittbretts 8 ergibt ein stabiles Fahrverhalten bei gleichzeitig niederliegendem Trittbrett 8. Damit wird das Fahrverhalten insbesondere in den Kurven verbessert, ohne dass auf größeren Durchmesser aufweisende Räder verzichtet werden muss. Unabhängig von der Radgröße kann durch Abänderung der Höhenlage der Achsen 11 am Träger 16 der Bodenabstand des Endbereiches 20 verändert bzw. gering gehalten werden. Der Träger 16 bleibt beim Kurvenfahren im wesentlichen in vertikaler Richtung ausgerichtet, da sich lediglich der Endbereich 20 des Trittbrettes 8 gegenüber dem Träger 16 verschwenkt, womit die Bremsbarkeit der beiden Hinterräder 9 mittels der Bremsabdeckung 10 und/oder eines der Hinterräder 9 mit der Bremsvorrichtung 13 nahezu unverändert beibehalten ist.

Es kann auch vorgesehen sein, dass im Endbereich 20 auf der Oberfläche 25 oder im Träger 16 an der Unterfläche 24 eine Ausnehmung bzw. Vertiefung ausgebildet ist, in die der Dämpfungsbauteil 19 eingelegt ist, sodass eine Befestigung des Dämpfungsbauteils 19 am Endbereich 20 und/oder am Träger 16 nicht unbedingt erforderlich wird.

Baulich und wirkungsmäßig für die Funktion der Bremsabdeckung 10 als Fußbremse von Vorteil ist es, wenn der Kastenträger 16 vom Endbereich 20 des Trittbrettes 8 leicht schräg nach hinten geneigt verläuft, sodass vor dem Träger Platz für die Anordnung der Bremsvorrichtung 13 bzw. für den Elektromotor 15 geschaffen wird. Aus Gewichtsersparnisgründen kann ein Kastenträger eingesetzt werden; auch der Einsatz eines vollen, massiven Trägers oder eines U-förmigen Trägers, in dessen Basis die Lagerung für ein Verschwenken gegenüber dem Endbereich 20 ausgebildet ist, ist möglich.

Aus Fig.1 sowie 3a, 3b und 4 ist ersichtlich, dass das Trittbrett 8 bzw. dessen hinterer Endbereich 20 nach hinten zu mit einem Vorsprung 43 verlängert ist, der die Begrenzungsebene E des Rollers bzw. der beiden Hinterräder 9 überragt. Dieser Vorsprung 43 dient zur Abbremsung der Hinterräder, wenn das Vorderrad 6 angehoben wird und die Hinterräder dabei am Boden verbleiben. Diese Gefahr ist dann gegeben, wenn das Standbein am Trittbrett 8 vor dem Körperschwerpunkt zu liegen kommt, wodurch der Roller nach vorne ausbricht und sich das Vorderrad 6 auch bei festgehaltener Lenkstange anheben kann. Durch diesen Vorsprung 43 wird verhindert, dass der Roller sich allzu sehr von dem Fahrer entfernt und der Fahrer nach hinten auf den Rücken fällt. Eine derartige Abbremseinrichtung ist für alle ein- und zweispurige Roller und auch den erfindungsgemäßen Roller geeignet. Beim erfindungsgemäßen Roller wird der Vorsprung zwischen den beiden Hinterrädern 9 vorgesehen. Prinzipiell kann ein derartiger Vorsprung 43 auch vom Trittbrett ausgehend das bzw. die Hinterräder umgeben und als Bügel über die hintere Ebene E des Rollers vorstehen. Die Unterfläche des Vorsprungs 43 verläuft gerundet nach hinten und oben.

Fig. 6 zeigt eine nicht zur Erfindung gehörende Ausführungsform betreffend das Niveau der Achsen 11 der Hinterräder 9. Eine derartige Ausführungsform ist insbesondere vorteilhaft für Hinterräder mit kleinem Durchmesser. Wesentlich bei dieser dargestellten Ausführungsform ist, dass das Niveau der Achsen 11 unterhalb des Niveaus der Schwenkachse A bzw. Lagerbolzens 18 liegt. Wie aus dieser Fig. leicht ersichtlich ist, könnte prinzipiell auch vorgesehen sein, dass das Niveau der Achsen 11 auf dem Niveau der Schwenkachse A liegt bzw. die Schwenkachse A und die Achsen 11 der Hinterräder 9 in einen und derselben Ebene liegen.

Bei der in Fig. 6 dargestellten Ausführungsform besitzt der Träger 16 seitlich gelegene, nach unten abgehende Lagerfortsätze 45, welche die Achsen 11 für die Hinterräder 9 tragen. Zwischen dem Endbereich 20 des Trittbretts 8 und dem Träger 16 bzw. dessen Basis ist ein Dämpfungsbauteil 19 angeordnet, der eine Ausnehmung 46 besitz. Diese Ausnehmung 46 dient zur Aufnahme der in dem Querträgerteil 47 des Trägers 18 angeordneten Lagerung für den mit einer Hülse 26 umgebenen Lagerbolzen 18. Die Lagerung kann von einem in den Querträger 47 eingeschweißten rohrförmigen Lagerbauteil gebildet sein. Bei dieser Ausführungsform können der Endbereich 20 und die Schwenkachse A relativ nahe einander angenähert werden; des weiteren kann der Träger 16 schlank und gewichtssparend aufgebaut sein und der Bodenabstand des Trittbretts 8 kann gering sein.

Der Dämpfungsbauteil 19 ist des weiteren in einer in der Oberfläche 24 des Endbereichs ausgebildeten Vertiefung gelegen.

Unter einem Trittbrett 8 wird derjenige Teil des Fahrzeugs verstanden, auf dem der Fahrer steht bzw. der Teil, der die Last der Person trägt. Dies ist im vorliegenden Fall eine auf dem Niveau der Räder liegende Abstützfläche für die Fußsohle der fahrenden Person. Prinzipiell könnte das Trittbrett auch einen Stützsattel für die Person tragen.

Des Weiteren ist es unerheblich, ob die Radachsen 11 auf einem Niveau oberhalb oder unterhalb des Trittbrettes 8 liegen; wesentlich ist, dass der Anlenkpunkt des Trägers 16 der Räder 9 auf einem Niveau oberhalb des Trittbretts 8 gelegen ist.

Eine Anordnung der Anlenkung des Trägers 16 auf dem Niveau des Trittbrettes oder unterhalb desselben verschlechtert das Fahrverhalten.

## Patentansprüche

1. Tretroller mit einem Vorderrad (6), einem Trittbrett und zwei parallel nebeneinander angeordneten Hinterrädern (9), wobei das Trittbrett (8) mit der damit verbundenen, das Vorderrad (6) tragenden Lenksäule (5) und die beiden Hinterräder (9) relativ zueinander verschwenkbar sind, wobei die beiden Hinterräder (9) auf einem Träger (16) gelagert sind und wobei dieser Träger (16) und das Trittbrett (8) um eine parallel zur Längsrichtung des Trittbretts (8) verlaufende Schwenkachse (A) relativ zueinander verschwenkbar sind, wobei der Träger (16) oberhalb des hinteren Endbereiches (20) des Trittbrettes (8) auf diesem Endbereich (20) verschwenkbar gelagert ist, **dadurch gekennzeichnet, dass** die Achsen (11) der Hinterräder (9) vom Träger (16) auf einem Niveau vom Träger (16) abgehen, das im Abstand oberhalb der Schwenkachse (A) liegt.

2. Roller nach Anspruch 1, **dadurch gekennzeichnet, dass** der Endbereich (20) zwischen den vom Träger (16) getragenen Hinterrädern (9) liegt und schmäler als das Trittbrett (8) ausgebildet ist, insbesondere auf 15% bis 35% der Breite des Trittbretts (8), verjüngt ist.

3. Roller nach Anspruch 1 oder 2, **dadurch gekennzeichnet, dass** der Träger (16) zumindest eine in Längsrichtung des Rollers (1) verlaufende Lagerausnehmung (23) aufweist, von der zumindest ein Lagerbolzen (18) aufgenommen ist, der von dem das Trittbrett (8) nach hinten verlängernden Endbereich (20) abgestützt bzw. von diesem getragen ist, um welchen Lagerbolzen (18) der Träger (16) und der Endbereich (20) relativ zueinander verschwenkbar sind.

4. Roller nach Anspruch 1 oder 2, **dadurch gekennzeichnet, dass** vom Träger (16) zumindest ein gegebenenfalls an diesem angeformter Lagerzapfen abgeht, der von einer Lagerausnehmung in dem das Trittbrett (8) nach hinten verlängernden Endbereich (20) aufgenommen bzw. in dieser verschwenkbar gelagert ist, oder dass der Endbereich (20) des Trittbretts (8) in Form eines Lagerbolzens ausgebildet ist und von einer Lageraufnahme des Trägers (16) aufgenommen und in dieser verschwenkbar gelagert ist.

5. Roller nach einem der Ansprüche 1 bis 4, **dadurch gekennzeichnet, dass** der Träger (16) eine nach unten weisende Fläche (24) aufweist, die im Abstand von der nach oben weisenden Fläche (25) des Endbereiches (20) unter Ausbildung eines Zwischenraumes (30), vorzugsweise parallel dazu, verläuft, und dass in dem Zwischenraum (30) zumindest ein die gegenseitigen Verschwenkbewegungen der beiden Flächen (24, 25) bzw. die Schwenkbewegungen des Trägers (16) und des Endbereiches (20) zueinander dämpfender bzw. diesen Schwenkbewegungen entgegenwirkender Dämpfungsbauteil (19) angeordnet ist.

6. Roller nach Anspruch 5, **dadurch gekennzeichnet, dass** der Zwischenraum (30) in Form einer Ausnehmung in der nach oben weisenden Fläche (25) des Endbereiches (20) oder in der nach untern weisende Fläche (24) des Trägers (16) ausgebildet ist.

7. Roller nach Anspruch 5 oder 6, **dadurch gekennzeichnet, dass** der Dämpfungsbauteil (19) von einem elastisch verformbaren Gummi- oder Kunststoffblock oder von einer Federeinheit gebildet ist.

8. Roller nach einem der Ansprüche 1 bis 7, **dadurch gekennzeichnet, dass** der Träger (16) einen vom Endbereich (20) nach oben, insbesondere in einem Winkel von 10° bis 40° zur Vertikalen nach hinten geneigt, auskragenden bzw. abgehenden Abschnitt aufweist, in dessen oberen Endabschnitt eine dem Umfang der beiden Hinterräder (9) in Richtung Trittbrett (8) folgende bzw. die beiden Hinterräder überdeckende Bremsabdeckung (10) verschwenkbar und dabei gegen die beiden Hinterräder (9) andrückbar gelagert ist.

9. Roller nach Anspruch 8, **dadurch gekennzeichnet, dass** auf dem Träger (16) zwischen der Bremsabdeckung (10) und dem Träger (16) ein elastisch verformbarer Gummi- oder Kunststoffblock (17) angeordnet ist, der die Bremsabdeckung (10) trägt und nach einem Verschwenken rückstellt, oder dass die Bremsabdeckung auf dem Träger (16) gegen Federwirkung verstellbar bzw. durch diese rückstellbar gelagert ist.

10. Roller nach einem der Ansprüche 1 bis 9, **dadurch gekennzeichnet, dass** das Trittbrett (8) in Richtung von der Lenksäule (5) zu den Hinterrädern (9) hin abfallend geneigt ausgebildet ist.

11. Roller nach einem der Ansprüche 1 bis 10, **dadurch gekennzeichnet, dass** nur für eines der beiden Hinterräder (9) eine mit der Hand betätigbare Bremsvorrichtung (13), vorzugsweise Scheibenbremse oder Bandbremse, vorgesehen ist.

12. Roller nach einem der Ansprüche 1 bis 11, **dadurch gekennzeichnet, dass** vom Endbereich (20) des Trittbrettes (8) ein, vorzugsweise eine nach hinten oben gerundet verlaufende Unterfläche aufweisender, Vorsprung (43) abgeht, der über die Endbegrenzungsebene (E) der Hinterräder (9) nach hinten vorsteht bzw. diese Ebene (E) überragt, wobei dieser Vorsprung (43) entweder mit dem Endbereich (20) einstückig ausgebildet oder durch einen an dem Endbereich (20) befestigten Bauteil gebildet ist.

13. Roller nach einem der Ansprüche 1 bis 12, **dadurch gekennzeichnet, dass** auf der Achse (11) des angetriebenen Hinterrades (9) eine Leerlaufnabe befestigt bzw. gelagert ist, von der eine Antriebsscheibe (14) getragen ist, an deren Umfangsfläche eine Abtriebswelle (42) zumindest eines vom Träger (16) getragenen Elektromotors (15) anliegt.

14. Roller nach einem der Ansprüche 1 bis 13, **dadurch gekennzeichnet, dass** in einer Ausnehmung (28) unterhalb des Trittbretts (8) Akkumulatoren und/oder Steuer- und Regeleinrichtungen für den Elektromotor (15) aufgenommen sind.

## Claims

1. A push scooter having a front wheel (6), a deck, and to rear wheels (9) arranged in parallel with one another, the deck (8) being pivotable using the steering post (5) connected thereto and bearing the front wheel (6), and the two rear wheels (9) being pivotable with respect to one another, the two rear wheels (9) being supported on a support (16) and said support (16) and the deck (8) being pivotable with respect to each other around a pivot axis (A) running parallel with the longitudinal direction of the deck (8), the support (16) being pivotably supported above the rear end area (20) of the deck (8) on said end area (20), **characterized in that** the axes (11) of the rear wheels (9) protrude from the support (16) on a level that is located at a distance above the pivot axis (A).

2. The scooter of Claim 1, **characterized in that** the end area (20) is located between the rear wheels (9) supported by the support (16) and formed to be narrower than the deck (8), in particular tapered to 15% to 35% of the width of the deck (8).

3. The scooter of Claim 1 or 2, **characterized in that** the support (16) has at least one bearing recess (23), by which at least one bearing bolt (18) is received, which is underpinned and/or supported by the end area (20) extending the deck (8) rearward, around which bearing bolt (18) the support (16) and the end area (20) are pivotable with respect to one another.

4. The scooter of Claim 1 or 2, **characterized in that** at least one bearing pin optionally formed on the support protrudes from the same, which bearing pin is received and/or pivotably supported in a bearing recess in the end area (20) extending the deck (8) rearward, or **in that** the end area (20) of the deck (8) is formed in the shape of a bearing bolt and received by, and pivotably supported in, a bearing recess of the support (16).

5. The scooter of any one of Claims 1 to 4, **characterized in that** the support (16) has a surface (24) facing downwards, which runs at a distance from, and preferably parallel with, the surface (25) of the end area (20), which faces upwards, while forming a gap (30), and **in that**, in said gap (30) at least one damping component (19) is arranged, which damps and/or counteracts the mutual pivoting movements of the two surfaces (24, 25) and/or the pivoting movements of the support (16) and the end area (20) with respect to one another.

6. The scooter of Claim 5, **characterized in that** the gap (30) is formed in the shape of a recess **in that** surface (25) of the end area (20) which faces upwards or **in that** surface (24) of the support (16) which faces downwards.

7. The scooter of Claim 5 or 6, **characterized in that** the damping component (19) is formed by an elastically deformable rubber or plastic block or by a spring unit.

8. The scooter of any one of Claims 1 to 7, **characterized in that** the support (16) has a section projecting and/or protruding from the end area (20) upwards, in particular at an angle of 10° to 40° inclining reawards towards the vertical, in the upper end section of which a stop capping (10), following the circumference of the two rear wheels (9) towards the deck (8) and/or capping the two rear wheels is supported pivotably and thus pressably against the two rear wheels (9).

9. The scooter of Claim 8, **characterized in that** an elastically deformable rubber or plastic block (17), which supports the stop capping (10) and retrieves it after being adjusted, is arranged on the support (16) between the stop capping (10) and the support (16), or **in that** the stop capping is supported on the support (16) such that is adjustable against, and/or retrievable by, spring action.

10. The scooter of any one of Claims 1 to 9, **characterized in that** the deck (8) is formed sloping in a direction from the steering post (5) towards the rear wheels (9).

11. The scooter of any one of Claims 1 to 10, **characterized in that** a braking device (13) to be operated manually, preferably a disc brake or a bank brake, is provided only for one of the two rear wheels (9).

12. The scooter of any one of Claims 1 to 11, **characterized in that** a protrusion (43), preferably one having a bottom surface assuming a rounded shape towards its rear upper end, extends from the end area (20) of the deck (8), protruding rearwards over the end boundary plane (E) of the rear wheels (9) and/or surmounting said plane, this protrusion (43) being formed either integrally with the end area (20) or by a component attached to the end area (20).

13. The scooter of any one of Claims 1 to 12, **characterized in that** a free-wheel hub is attached to and/or supported on the axis (11) of the driven rear wheel (9), by which a sheave (14) is supported, at the circumferential surface of which a drive shaft (42) of at least one electric motor (15) supported by the support (16) is abutted.

14. The scooter of any one of Claims 1 to 13, **characterized in that** accumulators and/or control and closed-loop control devices for the electric motor (15) are received in one recess (28) beneath the deck (8).

## Revendications

1. Trottinette avec une roue (6) avant, un marchepied et deux roues (9) arrière disposées parallèlement l'une à côté de l'autre, le marchepied (8) avec la colonne (5) de direction, reliée avec celui-ci et supportant la roue (6) avant, et les deux roues (9) arrière pouvant pivoter les uns relativement aux autres, les deux roues (9) arrière étant supportées par un support (16) et ce support (16) et le marchepied (8) pouvant être pivotés l'un relativement à l'autre autour d'un axe (A) parallèle à la direction longitudinale du marchepieds (8), le support (16) étant disposé de façon pivotable au-dessus de la zone (20) terminale arrière du marchepied (8) sur cette zone (20) arrière, **caractérisée en ce que** les axes (11) des roues (9) arrière s'étendent à partir du support (16) à un niveau du support (16), espacé au-dessus de l'axe (A) de pivotage.

2. Trottinette selon la revendication 1, **caractérisée en ce que** la zone (20) terminale est disposée entre les roues (9) arrière supportées par le support (16) et **en ce qu'**elle est plus étroite que le marchepied (8), en particulier s'affilant sur 15 % à 35 % de la largeur du marchepied (8).

3. Trottinette selon les revendications 1 ou 2, **caractérisée en ce que** le support (16) comporte au moins un évidement (23) de palier le long de la direction longitudinale de la trottinette (1), ledit évidement accueillant au moins un boulon (18) de palier appuyé sur ou supporté par la zone (20) terminale rallongeant le marchepied (8) vers l'arrière, autour dudit boulon (18) de palier le support (16) et la zone (20) terminale peuvent être pivotés l'un relativement à l'autre.

4. Trottinette selon les revendications 1 ou 2, **caractérisée en ce que** au moins un tourillon s'étend à partir du support (16) et est éventuellement formé sur celui-ci, ledit tourillon étant accueilli par ou disposé de façon pivotable dans un évidement de palier dans la zone (20) terminale rallongeant le marchepied (8) vers l'arrière, ou **en ce que** la zone (20) du marchepied (8) terminale présente la forme d'un boulon de palier et est étant accueillie par ou disposée de façon pivotable dans un logement de palier du support (16).

5. Trottinette selon une des revendications 1 à 4, **caractérisée en ce que** le support (16) comporte une face (24) orientée vers le bas, qui s'étend à distance de la face (25) de la zone (20) terminale orientée vers le haut, de préférence parallélement à celle-ci, en formant un interstice (30), et **en ce que** dans ledit interstice (30) au moins un élément (19) amortisseur est prévu, ledit élément amortissant les mouvements de pivotage entre les deux faces (24, 25) ou les mouvements de pivotage entre le support (16) et la zone (20) terminale ou agissant contre ces mouvements de pivotage.

6. Trottinette selon la revendication 5, **caractérisé en ce que** l'interstice (30) présente la forme d'un évidement dans la face (25) de la zone (20) terminale, orientée vers le haut ou dans la face (24) du support (16) orientée vers le bas.

7. Trottinette selon les revendications 5 ou 6, **caractérisée en ce que** l'élément (19) amortisseur est formé par un bloc en caoutchouc ou en plastique pouvant être déformé élastiquement ou par une unité de ressort.

8. Trottinette selon une des revendications 1 à 7, **caractérisée en ce que** le support (16) comporte une section saillissant ou s'étendant à partir de la zone (20) terminale vers le haut, en particulier formant un angle de 10 ° à 40 ° par rapport à la verticale et inclinée vers l'arrière, dans la zone terminale supérieur de laquelle une couverture (10) de frein suivant la circonférence des deux roues (9) arrière vers le marchepied (8) ou couvrant les deux roues arrière est disposée de façon pivotable et pouvant en même temps être appuyée contre les deux roues (9) arrière.

9. Trottinette selon la revendication 8, **caractérisée en ce que** sur le support (16), entre la couverture (10) de frein et le support (16), est disposé un bloc (17) en caoutchouc ou en plastique pouvant être déformé élastiquement, supportant la couverture (10) de frein et la repositionnant après un pivotement, ou **en ce que** la couverture de frein sur le support (16) peut être décalée par effet de ressort ou **en ce qu'**elle est disposée de façon à pouvoir être repositionnée par celle-ci.

10. Trottinette selon une des revendications 1 à 9, **caractérisée en ce que** le marchepied (8) est formé de façon inclinée à partir de la colonne (5) de direction vers les roues (9) arrière.

11. Trottinette selon une des revendications 1 à 10, **caractérisée en ce que** un dispositif (13) de frein, de préférence un frein à disque ou un frein à bande, est prévu uniquement pour une des deux roues (9) arrière.

12. Trottinette selon une des revendications 1 à 11, **caractérisée en ce qu'**une saillie (43) s'étend à partir de la zone (20) terminale du marchepied (8), ladite saillie comportant de préférence une face inférieure présentant une forme arrondie vers l'arrière en haut, qui se projette au-delà du plan (E) terminal de délimitation des roues (9) arrière vers l'arrière ou qui dépasse ce plan (E), ladite saillie (43) étant soit formée en une pièce avec la zone (20) terminale soit par un autre élément attaché à la zone (20) terminale.

13. Trottinette selon une des revendications 1 à 12, **caractérisée en ce que** sur l'axe (11) de la roue (9) arrière actionnée est attaché ou appuyé un moyeu à point mort, supportant un disque (14) d'actionnement, sur la face circonférentielle duquel est disposé un arbre (42) de transmission d'au moins un moteur (15) électrique supporté par le support (16).

14. Trottinette selon une des revendications 1 à 13, **caractérisé en ce que** dans un évidement (28) sous le marchepied (8) sont accueillis des accumulateurs et/ou des dispositifs de contrôle et d'ajustement pour le moteur (15) électrique.
